# EUROPÄISCHE PATENTSCHRIFT

(11) **EP 3 895 289 B1**
(45) Veröffentlichungstag und Bekanntmachung des Hinweises auf die Patenterteilung: **12.08.2026**
(21) Anmeldenummer: 19813487.6
(22) Anmeldetag: 29.11.2019
(51) Int. Cl.: H02K 11/33, H02K 9/22, H02K 5/16, H02K 5/15, H02K 11/215, H02K 29/06, H02K 5/22

(54) **ELEKTRISCHE MASCHINE MIT VONEINANDER GETRENNTEN WÄRMESENKEN**
ELECTRIC MACHINE WITH SEPARATED HEAT SINKS
MACHINE ÉLECTRIQUE AVEC DISSIPATEURS THERMIQUES SÉPARÉS

(30) Priorität: 14.12.2018 DE 102018221762
(43) Veröffentlichungstag der Anmeldung: 20.10.2021
(73) Patentinhaber: Robert Bosch GmbH, 70442 Stuttgart (DE)
(72) Erfinder: MUELLER, Hans-Peter, 72766 Reutlingen (DE); HESSLER, Thomas, 72805 Lichtenstein (DE); MOESSNER, Joerg, 72827 Wannweil (DE)
(86) Internationale Anmeldenummer: PCT/EP2019/083174
(87) Internationale Veröffentlichungsnummer: WO 2020/120178

(56) Entgegenhaltungen:
- EP-A1- 3 900 169
- EP-B1- 2 905 876
- WO-A1-2017/175325
- US-A1- 2017 349 206
- US-A1- 2018 026 492
- US-A1- 2018 219 450
- US-A1- 2018 254 685

## Beschreibung

### Stand der Technik

Die Erfindung betrifft eine elektrische Maschine, insbesondere eine elektronisch kommutierte Maschine, nach Anspruch 1.

Die Maschine weist ein Gehäuse auf und eine in dem Gehäuse aufgenommene Steuereinheit.

Die Steuereinheit ist ausgebildet, die Maschine zum Erzeugen eines magnetischen Drehfeldes anzusteuern.

Aus der US 2017 0349206 A1 ist eine elektrische Servolenkung bekannt, bei der ein Elektromotor und eine Steuereinheit in einem gemeinsamen Gehäuse aufgenommen sind.

Aus der US 2018 0219450 ist ein Antriebsapparat umfassend einen Motor und eine Steuereinheit bekannt, bei dem die Steuereinheit eine mit einer Abdeckung verbundene Wärmesenke aufweist.

Aus der US 2018 0026492 A1 ist ein elektrischer Antrieb bekannt, bei dem ein Sensor Magnet mit einem Endabschnitt einer Rotorwelle eines Motors verbunden ist, und bei dem ein Rotationssensor dem Sensormagnet in axialer Richtung gegenüberliegt.

Aus der US 2018 254 685 A1 ist ein Elektromotor bekannt, bei dem ein Inverter in einem Invertergehäuse aufgenommen ist.

### Offenbarung der Erfindung

Erfindungsgemäß weist das Gehäuse einen einen Hohlraum umschließenden Gehäusebecher und einen Gehäusedeckel auf. Die Maschine weist ein in dem Gehäusebecher aufgenommenes Lagerschild auf, wobei das Lagerschild mit dem Gehäusebecher wärmeleitfähig verbunden ist. Die Maschine weist auch eine Kühlplatte auf, welche mit dem Gehäusebecher und wenigstens einer Komponente, oder mehreren Komponenten der Steuereinheit wärmeleitfähig verbunden ist. Die Maschine weist einen Inverter, umfassend Halbleiterschalter, auf, wobei die Halbleiterschalter mit dem Lagerschild wärmeleitfähig verbunden sind. Das Lagerschild und die Kühlplatte schließen einen Teil des Hohlraums zwischeneinander ein, wobei in dem Teil des Hohlraums die Steuereinheit und der Inverter aufgenommen sind. Die Komponenten der Steuereinheit, insbesondere elektronische Komponenten wie integrierte Schaltkreise, Kondensatoren oder Widerstände, ragen so bevorzugt in den zwischen der Kühlplatte und dem Lagerschild gebildeten Hohlraum hinein. Die Halbleiterschalter des Inverters ragen ebenso in den so gebildeten Hohlraum hinein, sodass die Maschine so besonders aufwandsgünstig und kompakt gebildet sein kann. Vorteilhaft können so die Komponenten der Steuereinheit und die Halbleiterschalter des Inverters unabhängig voneinander gekühlt werden. Vorteilhaft können so zueinander verschiedene Temperaturniveaus an den zueinander verschiedenen Wärmesenken erzeugt werden, sodass - verglichen mit einer gemeinsamen Wärmesenke für die Halbleiter der Steuereinheit und die Halbleiter des Inverters - die Verlustwärme von einer Komponente mit einer kleineren Temperatur als die andere Wärmesenke so noch ungehindert abfließen kann.

Die Steuereinheit und der Inverter sind jeweils mittels wenigstens eines Steckkontakts, insbesondere für jede Phase gesondert, miteinander elektrisch verbunden. Die Steuereinheit, welche beispielsweise eine Leiterplatte umfasst, wird gemeinsam mit der Kühlplatte als eine kompakte Baugruppe in den Gehäusebecher eingefügt und mittels der Steckkontakte mit dem Inverter verbunden.

Die Steckkontakte sind bevorzugt jeweils als Schneid-Klemm-Kontakte ausgebildet. Vorteilhaft kann so eine Kaltschweißverbindung erzeugt sein.

In einer bevorzugten Ausführungsform ist die Kühlplatte in den Gehäusebecher eingeschrumpft, wobei mittels einer so erzeugten Pressverbindung erfindungsgemäß eine Stirnfläche der Kühlplatte mit einer Gehäusebecherwand des Gehäusebechers wärmeleitfähig verbunden ist. Vorteilhaft kann so eine kraftschlüssige Verbindung zwischen der Kühlplatte und der Gehäusebecherwand ausgebildet sein. Die Maschine kann so aufwandsgünstig erzeugt werden. Dazu kann beispielsweise der Gehäusebecher in einem Bereich, in dem die Kühlplatte mit dem Gehäusebecher verbunden werden soll, bis hin zu einem Gehäusebecherrand erwärmt werden, sodass ein Durchmesser des Gehäusebechers durch das Erwärmen erweitert wird. In diesem erweiterten Zustand des Gehäusebechers kann die Kühlplatte, welche bevorzugt bereits mit der Steuereinheit, insbesondere einem Schaltungsträger, welcher die Steuereinheit umfasst, in den Hohlraum des Gehäusebechers eingefügt werden. Nach einem Abkühlen des Gehäusebechers schrumpft die Gehäusebecherwand auf die Stirnseite der Kühlplatte, sodass die Kühlplatte mittels einer so gebildeten Presspassung fest mit dem Gehäusebecher kraftschlüssig verbunden ist.

In einer bevorzugten Ausführungsform ist der Gehäusedeckel mit der Kühlplatte mittels einer Steckverbindung steckverbunden und/oder mittels einer Rastverbindung rastend verbunden. Die Steuereinheit kann so vorteilhaft als vormontierte Baugruppe gemeinsam mit dem Gehäusedeckel beim Verschließen der Gehäuseöffnung in den Hohlraum eingebracht werden. Weiter bevorzugt kann beim Einfügen der Steuereinheit während eines Verschließens der Gehäusebecheröffnung die Steuereinheit elektrisch mit dem Inverter verbunden werden.

Der Gehäusedeckel kann zum Rastverbinden mit dem Gehäusebecher beispielsweise eine Rastnase aufweisen, welche ausgebildet ist, in eine entsprechende Aussparung des Gehäusebechers formschlüssig einzugreifen und dort zu verrasten.

In einer bevorzugten Ausführungsform weist der Gehäusedeckel einen nach außen weisenden Steckanschluss auf, wobei Steckkontakte des Steckanschlusses mit der Steuereinheit elektrisch verbunden sind. Die vorab erwähnten Komponenten der Baugruppe, umfassend den Gehäusedeckel und die Steuereinheit mit der Kühlplatte, können zum Erzeugen der vormontierten Baugruppe miteinander zusammengesteckt, verschraubt oder verlötet werden.

In einer bevorzugten Ausführungsform weist die Kühlplatte an der Stirnseite Vorsprungsbereiche auf und kontaktiert mit den Vorsprungsbereichen die Gehäusebecherwand insbesondere anpressend. Die Kühlplatte kann in dieser Ausführungsform vorteilhaft in den Gehäusebecher eingepresst werden. Die Kühlplatte braucht so vorteilhaft nicht - wie zuvor beschrieben - in den Gehäusebecher eingeschrumpft werden, sodass durch das einfache Einpressen der Kühlplatte in der Gehäusebecher die Steuereinheit auf einfache Weise mit dem Gehäusebecher verbunden werden kann.

In einer bevorzugten Ausführungsform sind der Gehäusedeckel, die Kühlplatte und die Steuereinheit miteinander insbesondere starr verbunden und bilden gemeinsam eine Baugruppe, die mit dem Gehäusebecher insbesondere trennbar verbunden werden kann. Die Maschine kann so besonders aufwandsgünstig durch Stecken oder Einpressen der Baugruppe in den Gehäusebecher bereitgestellt werden.

In einer bevorzugten Ausführungsform ist der Inverter mit der Steuereinheit und/oder der Kühlplatte mechanisch und elektrisch verbunden und ist Bestandteil der Baugruppe. Vorteilhaft kann so auch der Inverter, insbesondere Halbleiterschalter des Inverters, gemeinsam mit der Steuereinheit mit dem Gehäusebecher verbunden werden. Elektrische Anschlüsse, insbesondere Ausgangsanschlüsse des Inverters, beispielsweise Phasenanschlüsse des Inverters, welche mit Statorspulen eines Stators der Maschine verbunden sind, können mit den Anschlüssen der Statorspulen mittels einer Steckverbindung beim Einfügen der Baugruppe in den Gehäusebecher verbunden werden.

Die Halbleiterschalter des Inverters können zum Erzeugen der wärmeleitfähigen Verbindung mit dem Lagerschild der Maschine mit einem Wärmeleitmittel - beispielsweise durch Dispensen - verbunden werden, wobei nach einem Einbringen der Baugruppe in den Hohlraum die Halbleiterschalter des Inverters auf das Lagerschild aufgedrückt werden, sodass zwischen dem Lagerschild und den Halbleiterschaltern eine wärmeleitfähige Schicht, gebildet durch das Wärmeleitmittel, gebildet ist. Das Wärmeleitmittel ist beispielsweise eine Wärmeleitpaste oder ein partikelgefülltes Harz. Das partikelgefüllte, insbesondere mit Keramikpartikeln gefüllte Harz kann beispielsweise mittels Ultraviolett-Strahlen nach einem Zusammenfügen der Komponenten der Maschine ausgehärtet werden. Der Gehäusebecher kann dazu beispielsweise eine Öffnung aufweisen, durch welche eine Ultraviolett-Strahlenquelle in den Hohlraum in den Bereich der wärmeleitfähigen Verbindung eingebracht werden kann.

Die Erfindung betrifft auch ein Verfahren zum Erzeugen einer elektrischen Maschine nach Anspruch 11, wobei die Maschine einen Gehäusebecher und einen Gehäusedeckel aufweist, welcher ausgebildet ist eine Gehäuseöffnung des Gehäusebechers zu verschließen. Bei dem Verfahren wird in einem Schritt ein Lagerschild in den Gehäusebecher eingefügt und mit dem Gehäusebecher form- und/oder kraftschlüssig, und wärmeleitfähig verbunden.

In einem weiteren Schritt wird eine Kühlplatte mit einer Steuereinheit und einem mit der Steuereinheit verbundenen Inverter in den Gehäusebecher derart eingefügt, dass Halbleiterschalter des Inverters mit dem Lagerschild wärmeleitfähig verbunden werden. Dabei, oder in einem weiteren Schritt, wird die Kühlplatte, - zum Lagerschild sich parallel erstreckend, - in dem Gehäusebecher kraftschlüssig und/oder formschlüssig wärmeleitfähig verbunden. Die wärmeleitfähige Verbindung wird bevorzugt durch eine Presspassung erzeugt.

In einer bevorzugten Variante des Verfahrens bilden die Steuereinheit, die Kühlplatte und der Inverter eine mit dem Gehäusedeckel insbesondere starr verbundene Baugruppe, wobei beim Einfügen der Baugruppe in den Gehäusebecher die Gehäuseöffnung verschlossen wird. Vorteilhaft kann die Maschine so aufwandsgünstig bereitgestellt werden.

Bevorzugt wird die Kühlplatte beim Einfügen der Baugruppe in den Gehäusebecher mit dem Gehäusebecher durch Einpressen oder Einschrumpfen kraftschlüssig verbunden. Dadurch kann vorteilhaft ein guter Wärmeübergang von der Kühlplatte zum Gehäusebecher hin erzeugt sein.

Die Erfindung wird nun im Folgenden anhand von Figuren und weiteren Ausführungsbeispielen beschrieben. Weitere vorteilhafte Ausführungsvarianten ergeben sich aus einer Kombination der in den abhängigen Ansprüchen und in den Figuren beschriebenen Merkmalen.

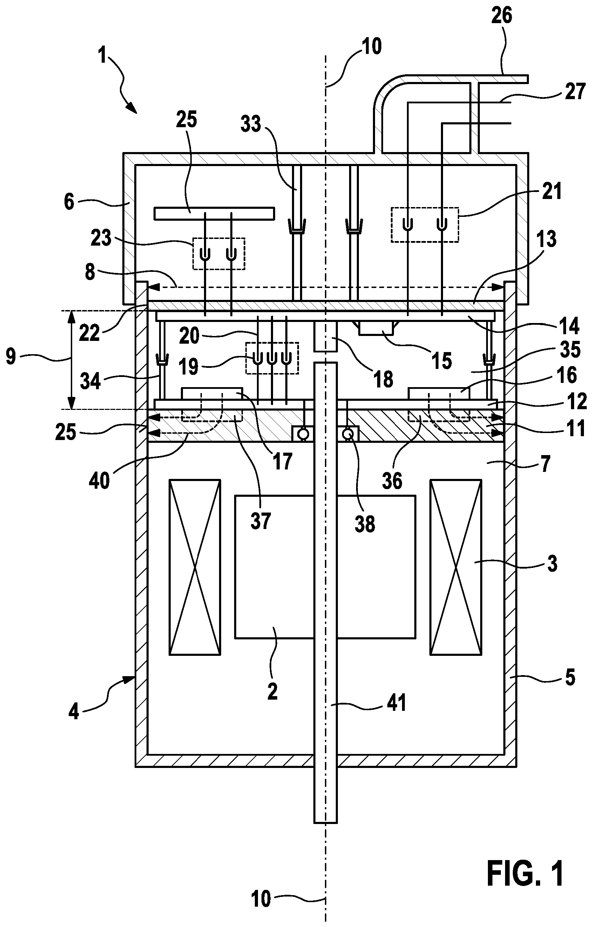

Figur 1 zeigt ein Ausführungsbeispiel für eine elektrische Maschine, deren elektrische Komponenten kompakt in einer Baugruppe zusammengefasst sind, wobei sich eine Kühlplatte zum Kühlen einer Steuereinheit parallel zu einem Lagerschild erstreckt und elektrische Komponenten der Steuereinheit in einem Hohlraum zwischen der Kühlplatte und dem Lagerschild angeordnet sind;

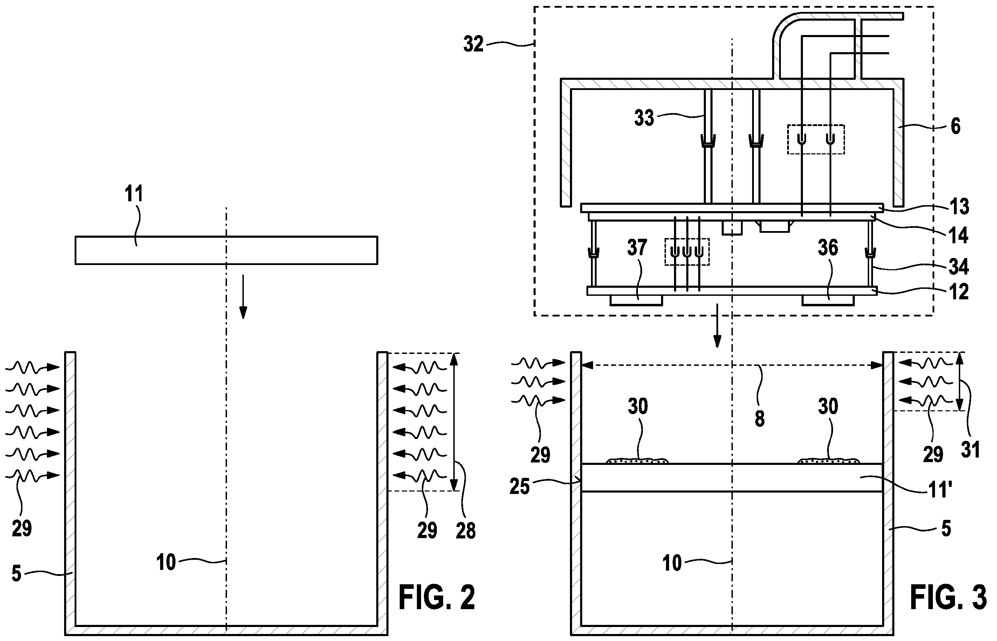

Figur 2 zeigt ein Ausführungsbeispiel für ein Verfahren zum Erzeugen einer Maschine, bei der elektrische Komponenten der Maschine vor einem Einfügen in einen Gehäusebecher der Maschine zusammengesteckt werden und dann als kompakte Baugruppe in den Gehäusebecher eingeführt werden, wobei der Gehäusebecher dadurch verschlossen werden kann;

Figur 3 zeigt ein Ausführungsbeispiel für ein Verfahren zum Erzeugen einer Maschine, bei dem eine vormontierte Baugruppe umfassend einen Gehäusedeckel, eine Steuereinheit und ein Inverter mit einem Gehäusebecher verbunden werden und dabei eine Öffnung des Gehäusebechers verschlossen wird.

Figur 1 zeigt ein Ausführungsbeispiel für eine Maschine 1. Die Maschine 1 weist einen Rotor 2, insbesondere einen permanentmagnetisch ausgebildeten Rotor, und einen Stator 3, umfassend Statorspulen auf. Die Maschine 1 weist auch ein Gehäuse 4, umfassend einen Gehäusebecher 5 und einen Gehäusedeckel 6 auf. Der Gehäusebecher 5 umschließt einen Hohlraum 7, in welchem der Rotor 2, der Stator 3 und ein Inverter zum Bestromen des Stators, sowie eine Steuereinheit zum Ansteuern des Inverters aufgenommen sind. Der Inverter umfasst in diesem Ausführungsbeispiel einen Schaltungsträger 12, mit welchem Leistungshalbleiter 16 und 17, insbesondere Halbleiterschalter, beispielsweise Feldeffekttransistoren verbunden sind. Die Steuereinheit umfasst in diesem Ausführungsbeispiel einen Schaltungsträger 14, mit welchem eine Verarbeitungseinheit 15, insbesondere ein Mikrocontroller oder ein Mikroprozessor, zum elektrischen Steuern der Maschine 1 verbunden ist.

Die Maschine 1 umfasst auch ein Lagerschild 11, welches in dem Hohlraum 7 aufgenommen und in den Gehäusebecher 5 eingeschrumpft ist. Die Maschine 1 umfasst auch eine Kühlplatte 13, welche in dem Hohlraum 7 aufgenommen ist und in den Gehäusebecher 5 eingeschrumpft ist. Sowohl das Lagerschild 11, als auch die Kühlplatte 13 sind so wärmeleitfähig - über eine Stirnseite 22 der Kühlplatte 13 beziehungsweise eine Stirnseite 25 des Lagerschilds 11 - mit dem Gehäusebecher 5 wärmeleitfähig verbunden.

Die Steuereinheit, insbesondere Verlustwärme erzeugende Komponenten der Steuereinheit wie die Verarbeitungseinheit 15, ist mit der Kühlplatte 13 wärmeleitfähig verbunden und kann die Verlustwärme - durch den Schaltungsträger 14 hindurch - an die Kühlplatte 13 leiten.

Der Inverter umfasst in diesem Ausführungsbeispiel einen Schaltungsträger 12, beispielsweise einen keramischen Schaltungsträger, welcher wärmeleitfähig mit dem Lagerschild 11 verbunden ist. Die Halbleiterschalter 16 und 17 können so Verlustwärme durch den Schaltungsträger 12 hindurch - insbesondere in einer Slug-Down-Anordnung - zu dem Lagerschild 11 leiten, von wo die Verlustwärme 40 über eine Stirnseite 25 des Lagerschilds 11 an den Gehäusebecher 5 abgegeben werden kann.

Das Lagerschild 11 weist in diesem Ausführungsbeispiel eine Ausnehmung für ein Rotorlager 38 auf, in welcher das Rotorlager 38 angeordnet ist. Der Rotor 2 umfasst in diesem Ausführungsbeispiel eine Rotorwelle 41, welche durch einen Durchbruch in dem Lagerschild 11 und durch einen Durchbruch in dem Schaltungsträger 12 hindurchragt. Der Schaltungsträger 14 der Steuereinheit und der Schaltungsträger 12 des Inverters schließen in diesem Ausführungsbeispiel einen Teil 35 des Hohlraums 7 zwischeneinander ein, welcher sich auf einem Längsabschnitt 9 entlang einer Längsachse 10 der Maschine 1 erstreckt. Die Längsachse 10 verläuft in diesem Ausführungsbeispiel koaxial zu einer Längserstreckung der Rotorwelle 41. Die Steuereinheit weist in diesem Ausführungsbeispiel einen Rotorlagesensor 18, insbesondere eine Hall-Sensor, AMR-Sensor (AMR = Anisotrope-Magneto-Resistive) oder GMR-Sensor (GMR = Giant-Magneto-Resistive) auf, welcher mit dem Schaltungsträger 14 verbunden ist, und welcher einem Ende der Rotorwelle 41 gegenüberliegt, und so eine Rotorlage des Rotors 2 erfassen kann.

Die mit den Schaltungsträgern 14 und 12 verbundenen elektrischen Komponenten, insbesondere elektrischen Bauteile, erstrecken sich in den auf dem Längsabschnitt 9 gebildeten Teil 35 des Hohlraums 7 hinein. Die mit dem Schaltungsträger 12 des Inverters verbundenen elektrischen Komponenten und die mit dem Schaltungsträger 14 der Steuereinheit verbundenen elektrischen Komponenten ragen so - insbesondere entlang der Längsachse 10 - einander entgegen. Die Schaltungsträger 12 und 14 sind in diesem Ausführungsbeispiel mittels stegförmigen Verbindungselementen miteinander mechanisch verbunden, von denen ein Verbindungselement 34 beispielhaft bezeichnet ist. Die Steuereinheit, insbesondere der Schaltungsträger 14 der Steuereinheit, ist mittels elektrischer Verbindungsleitungen mit dem Schaltungsträger 12, und so mit dem Inverter, elektrisch verbunden. Der Inverter kann so über die elektrischen Verbindungsleitungen von der Steuereinheit, insbesondere von der Verarbeitungseinheit 15, Steuersignale empfangen. Von den elektrischen Verbindungsleitungen ist eine Verbindungsleitung 20 beispielhaft bezeichnet. Die Verbindungsleitung 20 mündet in eine Steckbuchse 19, welche mit dem Schaltungsträger 12 elektrisch verbunden ist. Der Schaltungsträger 14 kann so - gemeinsam mit der Kühlplatte 13 - zur Verbindung mit dem Inverter zusammengesteckt werden.

Das Verbindungselement 34 ist dazu auch als Steckelement ausgebildet. So kann die Steuereinheit und der Inverter als vormontierte, insbesondere zusammengesteckte Baugruppe, durch eine Gehäusebecheröffnung 8 hindurch in den Hohlraum 7 des Gehäusebechers 5 eingefügt werden.

Die Steuereinheit, insbesondere der Schaltungsträger 14, weist in diesem Ausführungsbeispiel zu dem Gehäusedeckel 6 hin weisende Steckverbindungen, insbesondere Steckbuchsen 21 und 23 auf, welche jeweils in einen von dem Gehäusedeckel 6 umschlossenen Hohlraum hineinragen. Der Gehäusedeckel 6 weist in diesem Ausführungsbeispiel eine an den Gehäusedeckel 6 angeformte Steckverbindung 26 auf, welche Steckkontakte umfasst, von denen ein Steckkontakt 27 beispielhaft bezeichnet ist. Die Steckkontakte 27 sind durch den Gehäusedeckel 6 hindurch in den von dem Gehäusedeckel 6 umschlossenen Hohlraum geführt, und können dort in die Steckverbindung 21 eingeführt werden. Die Kühlplatte 13 ist in diesem Ausführungsbeispiel mittels einer insbesondere trennbaren mechanischen Steckverbindung 33 mit dem Gehäusedeckel 6 verbunden. Der Gehäusedeckel 6 kann so auf einfache Weise sowohl elektrisch als auch mechanisch mit dem Schaltungsträger 14 und der Kühlplatte 13 steckverbunden werden. Mit der Steckverbindung 33 ist in diesem Ausführungsbeispiel ein Schaltungsträger 25, insbesondere ein EMV-Filter (EMV = Elektro-Magnetische-Verträglichkeit), elektrisch und mechanisch verbunden.

Der Gehäusedeckel 6 kann so nach einem Steckverbinden mit der Kühlplatte 13 und dem Schaltungsträger 14 der Steuereinheit, und nach einem weiteren Steckverbinden des Schaltungsträgers 12 des Inverters, mit der Steuereinheit, insbesondere dem Schaltungsträger 14, als vormontierte Baugruppe in den Hohlraum 7 des Gehäusebechers 5 durch die Gehäusebecheröffnung 8 hindurch eingeführt werden.

Figur 2 zeigt einen Verfahrensschritt zum Verbinden des in Figur 1 dargestellten Lagerschilds 11 mit dem Gehäusebecher 5. Dazu wird der Gehäusebecher 5 auf einem Längsabschnitt 28 entlang der Längsachse 10 von einem Verbindungsort des Lagerschilds 11 mit dem Gehäusebecher 5 bis hin zu einem Gehäusebecherrand des Gehäusebechers 5 erstreckt, mittels Wärmestrahlen 29 erwärmt. Der Gehäusebecher 5 dehnt sich so in diesem Bereich entlang des Längsabschnitts 28 aus, sodass sein Durchmesser nach dem Erwärmen zunimmt. Das Lagerschild 11 kann dann in den Gehäusebecher 5 im Bereich des Längsabschnitts 28 reibungsfrei eingeführt werden. Nach einem Abkühlen des Gehäusebechers 5 auf dem Längsabschnitt 28 schrumpft der Gehäusebecher 5, insbesondere die Gehäusebecherwand, auf das Lagerschild 11 auf und presst gegen Stirnseiten des Lagerschilds 11, sodass eine Presspassung erzeugt werden kann.

Figur 3 zeigt ein Ausführungsbeispiel für einen Verfahrensschritt zum Erzeugen der in Figur 1 dargestellten Maschine 1. Figur 3 zeigt eine vormontierte Baugruppe 32, welche den Gehäusedeckel 6, die mit dem Gehäusedeckel 6 zusammengesteckte Steuereinheit, umfassend den Schaltungsträger 14 und die Kühlplatte 13, und den mit der Steuereinheit steckverbundenen Inverter, umfassend den Schaltungsträger 12. Mit dem Schaltungsträger 12 des Inverters sind in diesem Ausführungsbeispiel Leistungshalbleiter, insbesondere Halbleiterschalter 36 und 37, lötverbunden, welche - anders als in Figur 1 dargestellt - nicht in den auf dem Längsabschnitt 9 gebildeten Hohlraum zwischen den Schaltungsträgern 12 und 14 hineinragen, sondern welche sich von dem Schaltungsträger 12 des Inverters ausgehend zu dem Lagerschild 11 hin erstrecken. Die Halbleiterschalter 36 und 37 sind so mittels einer Slug-Up-Technik mit dem Lagerschild 11 wärmeleitfähig verbunden.

Das in Figur 2 dargestellte Lagerschild 11 ist in Figur 3 als in den Gehäusebecher 5 eingeschrumpftes Lagerschild 11' dargestellt. Auf das Lagerschild 11 ist - insbesondere zu den Halbleiterschaltern 36 und 37 gegenüberliegend - ein Wärmeleitmittel 30, insbesondere Wärmeleitpaste oder Wärmeleitklebstoff, aufgebracht. Die Baugruppe 32 kann so durch die Gehäusebecheröffnung 8 in den Gehäusebecher 5 eingefügt werden, bis die Halbleiterschalter 36 und 37 auf dem Lagerschild 11 aufliegen. Der Gehäusebecher 5 ist dann durch den Gehäusedeckel 6 verschlossen.

Der Gehäusebecher 5 kann vor einem Zusammenfügen mit der Baugruppe 32 auf einem Längsabschnitt 31, welcher sich von einem Verbindungsort der Kühlplatte 13 entlang der Längsachse 10 bis hin zu einem Gehäusebecherrand erstreckt, mittels Wärmestrahlen 29 erwärmt werden. Die Kühlplatte 13 kann so nach einem Einfügen in den Hohlraum 7 des Gehäusebechers 5 nach einem Abkühlen des Gehäusebechers 5 in den Gehäusebecher 5 eingeschrumpft werden. Anders als in Figur 3 dargestellt, kann die Kühlplatte 13 in den Gehäusebecher 5 eingepresst werden.

## Patentansprüche

1. Elektrische Maschine (1), insbesondere elektronisch kommutierter Elektromotor, mit einem Gehäuse (4), und einer in dem Gehäuse (4) aufgenommenen Steuereinheit (14, 15), wobei die Steuereinheit (14, 15) ausgebildet ist, die Maschine (1) zum Erzeugen eines magnetischen Drehfeldes anzusteuern,
wobei das Gehäuse (4) einen einen Hohlraum (7) umschließenden Gehäusebecher (5) und einen Gehäusedeckel (6) aufweist, und die Maschine (1) ein Lagerschild (11) aufweist,
wobei das Lagerschild (11) in dem Gehäusebecher (5) aufgenommen und mit dem Gehäusebecher (5) wärmeleitfähig verbunden ist, wobei die Maschine (1) einen Inverter (12) umfassend Halbleiterschalter (16, 17, 36, 37) aufweist und die Halbleiterschalter (16, 17, 36, 37) mit dem Lagerschild (11) wärmeleitfähig verbunden sind,
und die Maschine (1) eine Kühlplatte (13) aufweist, welche mit dem Gehäusebecher (5) und wenigstens einer Komponente (15) oder mehreren Komponenten der Steuereinheit (14, 15) wärmeleitfähig verbunden ist,
wobei das Lagerschild (11) und die Kühlplatte (13) einen Teil (9) des Hohlraums (7) zwischeneinander einschließen, und in dem Teil (9, 35) des Hohlraums (7) die Steuereinheit (14, 15) und der Inverter (12) aufgenommen sind, wobei die Steuereinheit (14, 15) gemeinsam mit der Kühlplatte (13) in den Gehäusebecher (5) eingefügt ist, und eine Stirnfläche (22) der Kühlplatte (13) mittels einer Pressverbindung mit einer Gehäusebecherwand des Gehäusebechers wärmeleitfähig verbunden ist,
wobei die Steuereinheit (14, 15) und der Inverter (12) mittels wenigstens eines Steckkontakts (19, 20) miteinander elektrisch verbunden sind.

2. Maschine (1) nach Anspruch 1,
**dadurch gekennzeichnet, dass**
jede Phase des Inverters (12) mittels eines Steckkontakts (19, 20) mit der Steuereinheit (14, 15) elektrisch kontaktiert ist.

3. Maschine (1) nach Anspruch 1 oder 2,
**dadurch gekennzeichnet, dass**
der Steckkontakt als Schneid-Klemmkontakt ausgebildet ist.

4. Maschine (1) nach einem der vorhergehenden Ansprüche,
**dadurch gekennzeichnet, dass**
der Gehäusedeckel (6), die Kühlplatte (13) und die Steuereinheit (14, 15) miteinander verbunden sind und gemeinsam eine vormontierte Baugruppe bilden, die mit dem Gehäusebecher (5) trennbar verbunden ist, wobei der Inverter und die Steuereinheit mittels des mindestens einen Steckkontakts beim Einfügen der vormontierten Baugruppe elektrisch verbindbar sind.

5. Maschine (1) nach einem der Ansprüche 1 bis 3,
**dadurch gekennzeichnet, dass**
der Gehäusedeckel (6), die Kühlplatte (13) und die Steuereinheit (14, 15) miteinander verbunden sind und gemeinsam eine vormontierte Baugruppe bilden, die mit dem Gehäusebecher (5) trennbar verbunden ist, wobei der Inverter (12) mit der Steuereinheit (14, 15) mechanisch und elektrisch verbunden und Bestandteil der Baugruppe ist. (14, 15)

6. Maschine (1) nach einem der vorhergehenden Ansprüche,
**dadurch gekennzeichnet, dass**
die Pressverbindung mittels Einschrumpfen (29) erzeugt ist.

7. Maschine (1) nach einem der Ansprüche 1 bis 5,
**dadurch gekennzeichnet, dass**
die Pressverbindung mittels Einpressen erzeugt ist.

8. Maschine (1) nach einem der vorhergehenden Ansprüche,
**dadurch gekennzeichnet, dass**
die Komponenten (15) der Steuereinheit und die Halbleiterschalter (16, 17) des Inverters unabhängig voneinander gekühlt werden können.

9. Maschine (1) nach einem der vorhergehenden Ansprüche,
**dadurch gekennzeichnet, dass**
der Gehäusedeckel (6) mit der Kühlplatte (13) mittels einer Steckverbindung (21, 33) steckverbunden und/oder mittels einer Rastverbindung rastend verbunden ist.

10. Maschine (1) nach einem der vorhergehenden Ansprüche,
**dadurch gekennzeichnet, dass**
die Kühlplatte (13) an der Stirnseite (22) Vorsprungsbereiche aufweist und mit den Vorsprungsbereichen die Wand des Gehäusebechers (5) anpressend kontaktiert.

11. Verfahren zum Erzeugen einer elektrischen Maschine (1) nach einem der vorhergehenden Ansprüche, wobei die Maschine einen Gehäusebecher (5) und einen Gehäusedeckel (6) aufweist, welcher ausgebildet ist, eine Gehäuseöffnung des Gehäusebechers zu verschließen,
wobei in einem Schritt ein Lagerschild (11) in den Gehäusebecher (5) eingefügt und mit dem Gehäusebecher (5) form- und/oder kraftschlüssig, und wärmeleitfähig verbunden wird, und in einem weiteren Schritt eine Kühlplatte (13) mit einer Steuereinheit (14, 15) und einem mit der Steuereinheit (14, 15) verbundenen Inverter (12) in den Gehäusebecher (5) derart eingefügt wird, dass Halbleiterschalter (16, 17, 36, 37) des Inverters (12) mit dem Lagerschild (11) wärmeleitfähig verbunden werden, und die Kühlplatte (13) zum Lagerschild (11) sich parallel erstreckend, mit dem Gehäusebecher (5) kraftschlüssig und/oder formschlüssig wärmeleitfähig verbunden wird, wobei eine Stirnfläche (22) der Kühlplatte (13) mittels einer Pressverbindung mit einer Gehäusebecherwand des Gehäusebechers wärmeleitfähig verbunden wird und wobei der Inverter, insbesondere jede Phase des Inverters (12), mittels eines Steckkontaktes (19, 20) (14, 15) elektrisch mit der Steuereinheit (14, 15) verbunden wird.

12. Verfahren nach Anspruch 11,
**dadurch gekennzeichnet, dass**
die Steuereinheit (14, 15), die Kühlplatte (13) und der Inverter (12) eine mit dem Gehäusedeckel insbesondere starr verbundene Baugruppe (32) bilden, so dass beim Einfügen der Baugruppe (32) in den Gehäusebecher (5) die Gehäusebecheröffnung (8) verschlossen wird.

13. Verfahren nach einem der vorhergehenden Ansprüche 11 oder 12,
**dadurch gekennzeichnet, dass**
die Kühlplatte (13) beim Einfügen der Baugruppe (32) in den Gehäusebecher (5) mit dem Gehäusebecher (5) durch Einpressen oder Einschrumpfen (29) kraftschlüssig verbunden wird.

## Claims

1. Electrical machine (1), in particular electronically commutated electric motor, having a housing (4), and a control unit (14, 15) that is accommodated in the housing (4), wherein the control unit (14, 15) is designed to control the machine (1) to generate a rotating magnetic field, wherein the housing (4) has a housing cup (5) that encloses a cavity (7), and has a housing cover (6), and the machine (1) has an end plate (11),
wherein the end plate (11) is accommodated in the housing cup (5) and is connected in a thermally conductive manner to the housing cup (5), wherein the machine (1) has an inverter (12) comprising semiconductor switches (16, 17, 36, 37), and the semiconductor switches (16, 17, 36, 37) are connected in a thermally conductive manner to the end plate (11),
and the machine (1) has a cooling plate (13) that is connected in a thermally conductive manner to the housing cup (5) and to at least one component (15), or a plurality of components, of the control unit (14, 15),
wherein the end plate (11) and the cooling plate (13) enclose between them a portion (9) of the cavity (7), and the control unit (14, 15) and the inverter (12) are accommodated in the portion (9, 35) of the cavity (7), wherein
the control unit (14, 15) together with the cooling plate (13) is inserted into the housing cup (5), and an end face (22) of the cooling plate (13) is connected in a thermally conductive manner to a housing-cup wall of the housing cup by means of a press connection, wherein
the control unit (14, 15) and the inverter (12) are electrically connected to one another by means of at least one plug-in contact (19, 20).

2. Machine (1) according to Claim 1,
**characterized in that**
each phase of the inverter (12) is electrically contacted with the control unit (14, 15) by means of a plug-in contact (19, 20).

3. Machine (1) according to Claim 1 or 2,
**characterized in that**
the plug-in contact is designed as an insulation-displacement contact.

4. Machine (1) according to any one of the preceding claims,
**characterized in that**
the housing cover (6), the cooling plate (13) and the control unit (14, 15) are connected to each other and together form a pre-assembled assembly that is separably connected to the housing cup (5), wherein the inverter and the control unit can be electrically connected by means of the at least one plug-in contact upon insertion of the pre-assembled assembly.

5. Method (1) according to any one of Claims 1 to 3,
**characterized in that**
the housing cover (6), the cooling plate (13) and the control unit (14, 15) are connected to each other and together form a pre-assembled assembly that is separably connected to the housing cup (5), wherein the inverter (12) is mechanically and electrically connected to the control unit (14, 15) and is part of the assembly.

6. Machine (1) according to any one of the preceding claims,
**characterized in that**
the press connection is produced by means of shrink-fitting (29).

7. Machine (1) according to any one of Claims 1 to 5,
**characterized in that**
the press connection is produced by means of pressing-in.

8. Machine (1) according to any one of the preceding claims,
**characterized in that**
the components (15) of the control unit and the semiconductor switches (16, 17) of the inverter can be cooled independently of one another.

9. Machine (1) according to any one of the preceding claims,
**characterized in that**
the housing cover (6) is plug-connected to the cooling plate (13) by means of a plug-in connection (21, 33) and/or connected in a latching manner by means of a latching connection.

10. Machine (1) according to any one of the preceding claims,
**characterized in that**
the cooling plate (13) has projection regions on the end face (22) and contacts the wall of the housing cup (5) with the projection regions, by pressing against it.

11. Method for producing an electrical machine (1) according to any one of the preceding claims, wherein the machine has a housing cup (5) and a housing cover (6) that is designed to close a housing opening of the housing cup, wherein in one step an end plate (11) is inserted into the housing cup (5) and is positively and/or non-positively connected to the housing cup (5) in a thermally conductive manner, and, in a further step, a cooling plate (13), with a control unit (14, 15) and an inverter (12) connected to a control unit (14, 15), is inserted into the housing cup (5) in such a manner that semiconductor switches (16, 17, 36, 37) of the inverter (12) are connected to the end plate (11) in a thermally conductive manner, and the cooling plate (13), extending parallel to the end plate (11), is non-positively and/or positively connected to the housing cup (5) in a thermally conductive manner, wherein an end face (22) of the cooling plate (13) is connected in a thermally conductive manner to a housing-cup wall of the housing cup by means of a press connection, and wherein the inverter, in particular each phase of the inverter (12), is electrically connected to the control unit (14, 15) by means of a plug-in contact (19, 20) (14, 15).

12. Method according to Claim 11,
**characterized in that**
the control unit (14, 15), the cooling plate (13) and the inverter (12) form an assembly (32) that is connected, in particular rigidly, to the housing cover, such that, upon insertion of the assembly (32) into the housing cup (5), the housing-cup opening (8) is closed.

13. Method according to either of preceding Claims 11 and 12,
**characterized in that**,
upon insertion of the assembly (32) into the housing cup (5), the cooling plate (13) is non-positively connected to the housing cup (5) by pressing-in or shrink-fitting (29).

## Revendications

1. Machine électrique (1), en particulier moteur électrique à commutation électronique, avec un boîtier (4), et une unité de commande (14, 15) logée dans le boîtier (4), l'unité de commande (14, 15) étant formée pour piloter la machine (1) pour générer un champ rotatif magnétique, le boîtier (4) comportant un godet (5) de boîtier entourant une cavité (7) et un couvercle (6) de boîtier, et la machine (1) comportant un flasque (11),
le flasque (11) étant logé dans le godet (5) de boîtier et étant relié de manière thermoconductrice au godet (5) de boîtier, la machine (1) comportant un onduleur (12) comprenant des commutateurs à semi-conducteurs (16, 17, 36, 37) et les commutateurs à semi-conducteurs (16, 17, 36, 37) étant reliés de manière thermoconductrice au flasque (11),
et la machine (1) comportant une plaque de refroidissement (13), qui est reliée de manière thermoconductrice au godet (5) de boîtier et à au moins un composant (15) ou plusieurs composants de l'unité de commande (14, 15), le flasque (11) et la plaque de refroidissement (13) renfermant entre eux une partie (9) de la cavité (7), et l'unité de commande (14, 15) et l'onduleur (12) étant logés dans la partie (9, 35) de la cavité (7),
l'unité de commande (14, 15) étant insérée conjointement avec la plaque de refroidissement (13) dans le godet (5) de boîtier, et une face frontale (22) de la plaque de refroidissement (13) étant reliée de manière thermoconductrice à une paroi de godet de boîtier du godet de boîtier par ajustement serré, l'unité de commande (14, 15) et l'onduleur (12) étant reliés électriquement l'un à l'autre au moyen d'au moins un contact enfichable (19, 20).

2. Machine (1) selon la revendication 1,
**caractérisée en ce que**
chaque phase de l'onduleur (12) est mise en contact électrique avec l'unité de commande (14, 15) au moyen d'un contact enfichable (19, 20).

3. Machine (1) selon la revendication 1 ou 2,
**caractérisée en ce que**
le contact enfichable est formé comme un contact autodénudant.

4. Machine (1) selon l'une des revendications précédentes,
**caractérisée en ce que**
le couvercle (6) de boîtier, la plaque de refroidissement (13) et l'unité de commande (14, 15) sont reliés les uns aux autres et forment ensemble un module préassemblé qui est relié de manière séparable au godet (5) de boîtier, l'onduleur et l'unité de commande pouvant être reliés électriquement au moyen de l'au moins un contact enfichable lors de l'insertion du module préassemblé.

5. Machine (1) selon l'une des revendications 1 à 3,
**caractérisée en ce que**
le couvercle (6) de boîtier, la plaque de refroidissement (13) et l'unité de commande (14, 15) sont reliés entre eux et forment ensemble un module préassemblé qui est relié de manière séparable au godet (5) de boîtier, l'onduleur (12) étant relié mécaniquement et électriquement à l'unité de commande (14, 15) et faisant partie intégrante du module.

6. Machine (1) selon l'une des revendications précédentes,
**caractérisée en ce que**
l'ajustement serré est produit par frettage (29).

7. Machine (1) selon l'une des revendications 1 à 5,
**caractérisée en ce que**
l'ajustement serré est produit par enfoncement.

8. Machine (1) selon l'une des revendications précédentes,
**caractérisée en ce que**
les composants (15) de l'unité de commande et les commutateurs à semi-conducteurs (16, 17) de l'onduleur peuvent être refroidis indépendamment les uns des autres.

9. Machine (1) selon l'une des revendications précédentes,
**caractérisée en ce que**
le couvercle (6) de boîtier est relié par enfichage à la plaque de refroidissement (13) au moyen d'une liaison par enfichage (21, 33) et/ou est relié par enclenchement au moyen d'une liaison par enclenchement.

10. Machine (1) selon l'une des revendications précédentes,
**caractérisée en ce que**
la plaque de refroidissement (13) comporte des zones saillantes sur la face frontale (22) et entre en contact par compression avec la paroi du godet (5) de boîtier par les zones saillantes.

11. Procédé de production d'une machine électrique (1) selon l'une des revendications précédentes, la machine comportant un godet (5) de boîtier et un couvercle (6) de boîtier, qui est formé pour fermer une ouverture de boîtier du godet de boîtier, un flasque (11) étant inséré, dans une étape, dans le godet (5) de boîtier et étant relié au godet (5) de boîtier par complémentarité de forme et/ou à force et de manière thermoconductrice, et une plaque de refroidissement (13) avec une unité de commande (14, 15) et un onduleur (12) relié à l'unité de commande (14, 15) étant insérée, dans une autre étape, dans le godet (5) de boîtier de telle manière que des commutateurs à semi-conducteurs (16, 17, 36, 37) de l'onduleur (12) sont reliés de manière thermoconductrice au flasque (11), et la plaque de refroidissement (13) étant reliée à force, par complémentarité de forme de manière thermoconductrice au godet (5) de boîtier tout en s'étendant parallèlement au flasque (11), une face frontale (22) de la plaque de refroidissement (13) étant reliée de manière thermoconductrice à une paroi de godet de boîtier du godet de boîtier par un ajustement serré, et l'onduleur, en particulier chaque phase de l'onduleur (12), étant relié électriquement à l'unité de commande (19, 20) (14, 15) au moyen d'un contact enfichable (19, 20).

12. Procédé selon la revendication 11,
**caractérisée en ce que**
l'unité de commande (14, 15), la plaque de refroidissement (13) et l'onduleur (12) forment un module (32), en particulier relié rigidement au couvercle de boîtier, de telle sorte que l'ouverture (8) de godet de boîtier est fermée lorsque le module (32) est inséré dans le godet (5) de boîtier.

13. Procédé selon l'une des revendications précédentes 11 ou 12,
**caractérisée en ce que**
la plaque de refroidissement (13) est reliée à force au godet (5) de boîtier par enfoncement ou frettage (29) lors de l'insertion du module (32) dans le godet (5) de boîtier.
